# EUROPÄISCHE PATENTSCHRIFT

(11) **EP 2 640 935 B1**
(45) Veröffentlichungstag und Bekanntmachung des Hinweises auf die Patenterteilung: **06.05.2020**
(21) Anmeldenummer: 11808152.0
(22) Anmeldetag: 05.11.2011
(51) Int. Cl.: F01D 5/16

(54) **LAUFSCHAUFELANORDNUNG FÜR EINE TURBOMASCHINE**
ROTOR BLADE ARRANGEMENT FOR A TURBO MACHINE
ENSEMBLE D'AUBE MOBILE POUR UNE TURBOMACHINE

(30) Priorität: 16.11.2010 DE 102010051529; 08.02.2011 EP 11153621
(43) Veröffentlichungstag der Anmeldung: 25.09.2013
(73) Patentinhaber: MTU Aero Engines AG, 80995 München (DE)
(72) Erfinder: HARTUNG, Andreas, 81829 München (DE)
(86) Internationale Anmeldenummer: PCT/DE2011/001964
(87) Internationale Veröffentlichungsnummer: WO 2012/065595

(56) Entgegenhaltungen:
- EP-A1- 1 892 377
- CH-A5- 660 207
- FR-A- 1 263 677
- GB-A- 2 223 277
- US-A- 1 833 751
- US-A- 2 349 187
- US-A- 2 828 941
- US-A- 2 862 686
- US-A- 2 997 274

## Beschreibung

Die Erfindung betrifft eine Laufschaufelanordnung für eine Turbomaschine, insbesondere eine Gasturbine, mit einem Hohlraum, in dem eine bewegliche Masse angeordnet ist, eine Turbomaschine mit sowie ein Verfahren zur Auslegung einer solchen Laufschaufelanordnung.

Laufschaufeln von Turbomaschinen, insbesondere von Gasturbinen, neigen aufgrund ihrer Elastizität und Anregung, insbesondere durch das sie durchströmende Arbeitsfluid sowie mechanische Vibrationen, zu Schwingungen. Werden dabei Eigenfrequenzen der Laufschaufeln angeregt, kann die Resonanz zur Beschädigung der Turbomaschine, insbesondere der Laufschaufeln, führen und verringert so die Lebensdauer.

Die US 2,862,686 schlägt daher vor, bewegliche Kugeln im Inneren hohler Schaufeln vorzusehen. Während des gesamten Betriebs presst die Zentrifugalkraft die Kugeln in ihrer Keilführung radial nach außen, wo sie eine Rippe bilden und so die Schaufel versteifen. Dehnt sich die Schaufel infolge Erwärmung aus, rutschen die Kugeln auf der Innenwandung des Schaufelhohlraumes nach und passen sich so an. Die Kugeln sind ausschließlich in Hinblick auf die Versteifungswirkung ausgelegt.

Aus der DE 10 2009 010 185 A1 der Anmelderin ist eine Schaufelanordnung nach dem Oberbegriff des Anspruchs 1 bekannt. Dabei führen scheibenförmige Dämpfungskörper, die frei beweglich in Hohlräumen der Schaufel anordnung angeordnet sind, reibungsbehaftete Stöße miteinander und mit der Innenwandung aus und dissipieren auf diese Weise Schwingungsenergie aus dem System. Die Dämpfungskörper sind hier in Hinblick auf ihre Dämpfungswirkung ausgelegt.

Aufgabe der vorliegenden Erfindung ist es, das Schwingungsverhalten von Turbomaschinen zu verbessern.

Zur Lösung dieser Aufgabe ist eine Schaufelanordnung nach dem Oberbegriff des Anspruchs 1 durch dessen kennzeichnende Merkmale weitergebildet. Anspruch 7 stellt eine Turbomaschine mit einer erfindungsgemäßen Laufschaufelanordnung unter Schutz, Anspruch 8 ein Verfahren zur Auslegung einer solchen Laufschaufelanordnung. Vorteilhafte Weiterbildungen sind Gegenstand der Unteransprüche.

Die vorliegende Erfindung basiert auf der Tatsache, dass die Eigenfrequenzen eines System insbesondere durch dessen Masse bzw. Massenverteilung bestimmt werden. Koppelt man daher bei einem System kurz vor Erreichen einer Eigenfrequenz miteinander gekoppelter Massen eine oder mehrere dieser Massen ab oder umgekehrt eine oder mehrere Massen hinzu, verändern sich schlagartig die Eigenfrequenzen des solcherart in seiner Struktur veränderten Systems, so dass die Eigenfrequenz des ursprünglichen Systems ohne Resonanz durchfahren werden kann. Nach Durchfahren dieser Frequenz können die Massen, die zur Verstimmung der Eigenfrequenzen ab- bzw. angekoppelt wurden, wieder an- bzw. abgekoppelt und das System in einem über seiner durchfahrenen Eigenfrequenz liegenden Betriebszustand betrieben werden.

Eine Laufschaufelanordnung gemäß der vorliegenden Erfindung weist eine oder mehrere miteinander lösbar oder unlösbar, insbesondere integral verbundene Laufschaufel auf. Zur kompakteren Darstellung wird vorliegend auch eine einzige Laufschaufel verallgemeinernd als Laufschaufelanordnung im Sinne der vorliegenden Erfindung bezeichnet. Auch sogenannte Laufschaufelcluster, d.h. zwei oder mehr miteinander verbundene Laufschaufeln, sowie komplette Laufgitter, insbesondere sogenannte BLISKs ("Blade integrated disks") werden als Laufschaufelanordnung bezeichnet.

Die Laufschaufelanordnung weist einen oder mehrere Hohlräume auf, die offen oder geschlossen ausgebildet sein können. Insbesondere können in einem Schaufelblatt einer Laufschaufel oder in einem, mehreren oder allen Schaufelblättern miteinander verbundener Laufschaufeln je ein oder mehrere Hohlräume ausgebildet sein. Zusätzlich oder alternativ können in einem Innen- und/oder einem Außenring einer Schaufel oder mehrerer miteinander verbundener Schaufeln ein oder mehrere Hohlräume ausgebildet sein. Mit besonderem Vorteil sind ein oder mehrere, vorzugsweise miteinander kommunizierende, Hohlräume, wenigstens teilweise, in und/oder unter der sogenannten Plattform einer oder mehrerer miteinander verbundener Schaufeln ausgebildet. In diesem Sinne kann eine Laufschaufelanordnung im Sinne der vorliegenden Erfindung auch einen Teil eines Rotors umfassen, an dem die Laufschaufelanordnung befestigt ist, und in dem ein oder mehrere der Hohlräume, wenigstens teilweise, ausgebildet sind. Die Anordnung eines oder mehrerer Hohlräume wenigstens zum Teil unter der Plattform einer oder mehrerer Schaufeln kann insbesondere in Hinblick auf die Fertigung und Wartung vorteilhaft sein.

In einem oder mehreren der vorgenannten Hohlräume sind jeweils eine oder mehrere Stimmmassen beweglich angeordnet. Dabei können Stimmmassen ungebunden, d.h. frei beweglich und lose, in dem jeweiligen Hohlraum angeordnet sein. Gleichermaßen können sie in wenigstens einer Richtung, vorzugsweise in axialer und/oder Umfangsrichtung geführt sein, so dass sie sich beispielsweise nur in radialer Richtung bewegen können. Eine Führung kann insbesondere formschlüssig, etwa durch einen bzw. mehrere, insbesondere radiale, Kanäle, ausgebildet sein, in denen Stimmmassen verschieblich geführt sind. Gleichermaßen können eine oder mehrere Stimmmassen auch elastisch in dem jeweiligen Hohlraum gelagert sein, etwa, indem sie durch eine oder mehrere elastische Strukturen, zum Beispiel Blattfedern, an dem Hohlraum angebunden, d.h. lösbar oder unlösbar befestigt sind. In einer bevorzugten Weiterbildung sind zwei oder mehr der vorgenannten Aspekte kombiniert, indem etwa eine Stimmmasse, die in einem radialen Kanal formschlüssig geführt ist, zusätzlich durch eine druck- oder zugfederartige Struktur in radialer Richtung elastisch gelagert bzw. gefesselt ist.

Erfindungsgemäß ist nun, wie einleitend erläutert, nach einem ersten Aspekt vorgesehen, dass sich eine oder mehrere dieser Stimmmassen, die im Betrieb der Turbomaschine infolge der Zentrifugalkraft an einer Innenwandung des jeweiligen Hohlraumes anliegen, kurz vor Erreichen einer vorgegebenen Eigenfrequenz der Schaufelanordnung mit anliegender Stimmmasse bzw. anliegenden Stimmmassen, wenigstens kurzzeitig und insbesondere stoßartig, von der Innenwandung lösen und so die Eigenfrequenz der Schaufelanordnung, wenigstens bis zur Wideranlage an der Innenwandung, verstimmen. Zusätzlich oder alternativ ist nach einem zweiten Aspekt vorgesehen, dass sich eine oder mehrere dieser Stimmmassen, die im Betrieb der Turbomaschine, insbesondere durch ihre elastische Lagerung, von der Innenwandung des jeweiligen Hohlraumes beabstandet sind, sich kurz vor Erreichen einer vorgegebenen Eigenfrequenz der Schaufelanordnung mit beabstandeter Stimmmasse bzw. beabstandeten Stimmmassen infolge der Zentrifugalkraft, wenigstens kurzzeitig und insbesondere stoßartig, an die Innenwandung anlegen, und so wiederum die Eigenfrequenz der Schaufelanordnung, wenigstens bis zur Lösung von der Innenwandung, verstimmen.

Hierzu sind die Stimmmasse(n), der Hohlraum und/oder eine elastische Lagerung der Stimmmasse(n) derart abgestimmt, dass die Stimmmasse in einem vorgegebenen ersten Betriebszustand der Turbomaschine an einer Innenwandung des Hohlraums anliegt und sich in einem zweiten vorgegebenen Betriebszustand der Turbomaschine, wenigstens zeitweise, von der Innenwandung löst. Der erste oder zweite Betriebszustand ist vorzugsweise einer Eigenfrequenz der Laufschaufelanordnung mit an der Innenwandung anliegender oder von dieser beabstandeten Stimmmasse bzw. Stimmmassen benachbart. Dabei wird unter einem benachbarten Betriebszustand insbesondere ein Betrieb der Turbomaschine verstanden, der im Bereich des 0,9fachen bis 0,99fachen der entsprechenden Eigenfrequenz liegt.

Um eine Stimmmasse erfindungsgemäß abzustimmen, kann insbesondere ihre Masse, ihre Form, ihre Oberfläche, insbesondere ihr Reibbeiwert und/oder ihre Oberflächenhärte und/oder -steifigkeit, ihr Schwerpunkt und/oder ihr Trägheitstensor geeignet vorgegeben werden. In einer bevorzugten Ausführung weist eine Stimmmasse eine Kugelform auf. Die Innenwandung eines Hohlraums kann insbesondere in ihrer Form und/oder Oberfläche abgestimmt werden, wobei es vorteilhaft ist, Stimmmasse und Innenwandung in ihrer Form und/oder Oberfläche aufeinander abzustimmen. Ist eine Stimmmasse elastisch in dem Hohlraum gelagert bzw. gefesselt, ist vorzugsweise auch diese Lagerung bzw. Fesselung entsprechend abgestimmt.

Die Abstimmung von Stimmmasse, Innenwandung und gegebenenfalls elastischer Lagerung auf die Laufschaufelanordnung, insbesondere deren Eigenfrequenzen, und auf die Betriebszustände der Turbomaschine kann sowohl numerisch, insbesondere durch Simulation, als auch empirisch durch Versuche erfolgen. In einer bevorzugten Ausführung eines erfindungsgemäßen Verfahrens werden dabei nacheinander verschiedene Stimmmassen in einen Hohlraum eingebracht und im Betrieb der Turbomaschine getestet, ob sie die gewünschte Eigenfrequenzverstimmung leisten. Insbesondere hierzu ist es vorteilhaft, wenn in einer bevorzugten Ausführung die Stimmmasse(n) zerstörungsfrei, beispielsweise nach Entfernen der Schaufelplattform vom Rotor aus einem zwischen Rotor und Plattform gebildeten Hohlraum, entnommen werden können.

Ein Lösen einer Stimmmasse kann insbesondere durch Vibrationen erfolgen, die im Betrieb kurz vor Erreichen einer Eigenfrequenz der Laufschaufelanordnung mit anliegender Stimmmasse auftreten. In einem solchen Fall treibt die Zentrifugalkraft die Stimmmasse wieder an die Innenwandung zurück, die sie in einem oder mehreren vollelastischen oder teilplastischen Stößen kontaktiert. In einer bevorzugten Ausführung sind die Stimmmasse und der Hohlraum entsprechend abgestimmt, insbesondere durch entsprechende Gestaltung der Oberfläche.

Eine erfindungsgemäße Laufschaufel kann insbesondere in einer Turbine(nstufe) oder einem Verdichter bzw. einer Verdichterstufe einer Gasturbine, insbesondere eines Flugtriebwerkes, eingesetzt werden. Vorzugsweise wird sie in Niederdruckstufen eingesetzt.

Weitere Merkmale und Vorteile ergeben sich aus den Unteransprüchen und dem Ausführungsbeispiel. Hierzu zeigt, teilweise schematisiert, die einzige:

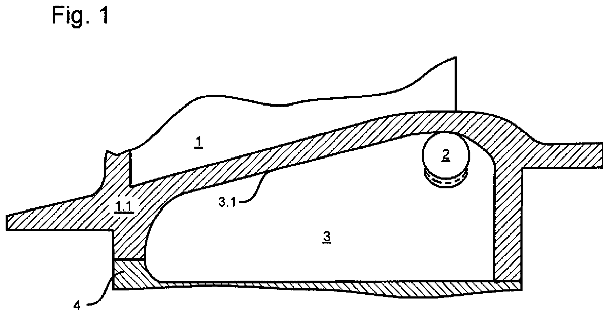

- Fig. 1: die Plattform einer Laufschaufel mit einer Stimmmasse nach einer Ausführung der vorliegenden Erfindung im Axialschnitt.

Fig. 1 zeigt die Plattform 1.1 einer nur teilweise dargestellten Laufschaufel 1 nach einer Ausführung der vorliegenden Erfindung im Axialschnitt. Diese ist in nicht näher dargestellter Weise an einem ebenfalls nur teilweise dargestellten Rotor 4 befestigt. Zwischen Plattform 1.1 und Rotor 4, d.h. an dem durch die Plattform 1.1 gebildeten Innenring der Laufschaufel, ist ein geschlossener Hohlraum 3 ausgebildet. Dieser wird durch die Außenseite des Rotors 4 und die Unterseite der Plattform 1.1 definiert und kann durch Entfernen der Schaufel 1 vom Rotor 4 geöffnet werden.

In dem Hohlraum 3 ist eine kugelförmige Stimmmasse 2 frei beweglich angeordnet. Der Hohlraum 3 und die Stimmmasse 2 sind in ihrer Form derart aufeinander abgestimmt, dass die Stimmmasse im Betrieb der Turbomaschine, d.h. bei Drehung des Rotors 4, durch die Zentrifugalkraft an die radial außenliegende Innenwandung 3.1 des Hohlraums 3 gepresst wird und dort infolge der keilförmigen Innenwandung axial an deren eines Ende (rechts in Fig. 1) wandert.

Nähert sich die Rotordrehzahl einer bestimmten Eigenfrequenz der Laufschaufel 1 mit an deren Plattformunterseite 3.1 infolge der Zentrifugalkraft anliegender Stimmmasse 2, beispielsweise der ersten Biege- oder Torsionseigenfrequenz, so treten Vibrationen der Schaufel 2 auf. Die Masse der Stimmmasse 2 ist nun gerade so abgestimmt bzw. vorgegeben bzw. gewählt, dass sich die Stimmmasse infolge dieser Vibrationen stoßartig, d.h. jeweils kurzzeitig, von der Plattformunterseite 3.1 der Schaufel 1 löst, bevor die Zentrifugalkraft sie wieder dahin zurücktreibt. Durch das Lösen der Stimmmasse wird diese von der Schaufel 1 entkoppelt, so dass die Eigenfrequenzen der Schaufel - nun ohne anliegende bzw. gekoppelte Stimmmasse - sich schlagartig ändern. Auf diese Weise kann die Eigenfrequenz der Laufschaufel 1 mit anliegender Stimmmasse 2 durchfahren werden, ohne dass andauernde und somit gefährliche Resonanz auftritt. Dabei ist es für die vorliegende Erfindung unschädlich, wenn zeitweise Resonanz auftritt, im vorstehenden Ausführungsbeispiel etwa immer dann, wenn die Stimmmasse 2 nach Stoßkontakt wieder an der Plattformunterseite 3.1 anliegt, da sie sich von dort durch die Vibrationen infolge ihrer entsprechend gewählten Masse wieder, wenigstens kurzzeitig, löst und so jedenfalls ein übermäßiges Aufschaukeln bzw. Anfachen der Resonanz verhindert.

## Patentansprüche

1. Laufschaufelanordnung für eine Turbomaschine, insbesondere eine Gasturbine, mit wenigstens einer Laufschaufel (1), wobei die Laufschaufelanordnung wenigstens einen Hohlraum (3) aufweist, in dem wenigstens eine Stimmmasse (2) beweglich angeordnet ist, wobei die Stimmmasse und/oder der Hohlraum derart abgestimmt ist, dass die Stimmmasse in einem vorgegebenen ersten Betriebszustand der Turbomaschine an einer Innenwandung (3.1) des Hohlraums anliegt und sich in einem zweiten vorgegebenen Betriebszustand der Turbomaschine, wenigstens zeitweise, von der Innenwandung löst, **dadurch gekennzeichnet, dass** einer von dem ersten und dem zweiten vorgegebenen Betriebszustand einer Eigenfrequenz der Laufschaufelanordnung mit an der Innenwandung anliegender oder von dieser beabstandeten Stimmmasse benachbart ist, wobei der benachbarte Betriebszustand im Bereich des 0,9fachen bis 0,99fachen dieser Eigenfrequenz der Laufschaufelanordnung liegt.

2. Laufschaufelanordnung nach Anspruch 1, **dadurch gekennzeichnet, dass** eine Masse, Form, Oberfläche, ein Schwerpunkt und/oder Trägheitstensor der Stimmmasse und/oder eine Form und/oder Oberfläche der Innenwandung des Hohlraums derart abgestimmt ist, dass die Stimmmasse in dem ersten Betriebszustand an der Innenwandung anliegt und sich in dem zweiten Betriebszustand, wenigstens zeitweise, von der Innenwandung löst.

3. Laufschaufelanordnung nach einem der vorhergehenden Ansprüche, **dadurch gekennzeichnet, dass** die Stimmmasse elastisch in dem Hohlraum gelagert ist, wobei die Stimmmasse und ihre elastische Lagerung derart abgestimmt sind, dass die Stimmmasse in dem ersten Betriebszustand an der Innenwandung anliegt und in dem zweiten Betriebszustand, wenigstens zeitweise, von der Innenwandung beabstandet ist.

4. Laufschaufelanordnung nach einem der vorhergehenden Ansprüche, **dadurch gekennzeichnet, dass** die Stimmmasse und/oder der Hohlraum derart abgestimmt ist, dass die Stimmmasse in dem vorgegebenen Betriebszustand der Turbomaschine Stöße mit der Innenwandung ausführt.

5. Laufschaufelanordnung nach einem der vorhergehenden Ansprüche, **dadurch gekennzeichnet, dass** ein Hohlraum (3) in oder an einem Innen- oder Außenring wenigstens einer Schaufel der Schaufelanordnung, insbesondere unter einer Plattform (1.1) wenigstens einer Schaufel (1) der Schaufelanordnung, ausgebildet ist.

6. Laufschaufelanordnung nach einem der vorhergehenden Ansprüche, **dadurch gekennzeichnet, dass** ein Hohlraum in einem Schaufelblatt einer Schaufel der Schaufelanordnung ausgebildet ist.

7. Turbomaschine, insbesondere eine Gasturbine, mit wenigstens einer Laufschaufelanordnung nach einem der vorhergehenden Ansprüche.

8. Verfahren zur Auslegung einer Laufschaufelanordnung nach einem der vorhergehenden Ansprüche 1 bis 6, **dadurch gekennzeichnet, dass** wenigstens eine Stimmmasse (2) und/oder der sie aufnehmende Hohlraum (3) derart abgestimmt ist, dass die Stimmmasse in dem vorgegebenen ersten Betriebszustand der Turbomaschine an der Innenwandung (3.1) anliegt und sich in dem zweiten, wenigstens zeitweise, von der Innenwandung löst.

## Claims

1. Rotor blade assembly for a turbomachine, in particular a gas turbine, having at least one rotor blade (1), the rotor blade assembly having at least one cavity (3) in which at least one tuning mass (2) is movably arranged, the tuning mass and/or the cavity being adapted such that the tuning mass rests against an inner wall (3.1) of the cavity in a predetermined first operating state of the turbomachine and moves away from the inner wall, at least temporarily, in a second predetermined operating state of the turbomachine, **characterized in that** either the first or the second predetermined operating state is adjacent to a natural frequency of the rotor blade assembly having a tuning mass which rests on or is spaced apart from the inner wall, the adjacent operating state being in the range from 0.9 to 0.99 times said natural frequency of the rotor blade assembly.

2. Rotor blade assembly according to claim 1, **characterized in that** a mass, shape, surface, center of gravity and/or inertia tensor of the tuning mass and/or a shape and/or surface of the inner wall of the cavity is adapted such that the tuning mass rests against the inner wall in the first operating state and moves away from the inner wall, at least temporarily, in the second operating state.

3. Rotor blade assembly according to either of the preceding claims, **characterized in that** the tuning mass is resiliently mounted in the cavity, the tuning mass and the resilient mounting thereof being adapted such that the tuning mass rests against the inner wall in the first operating state and is spaced apart from the inner wall, at least temporarily, in the second operating state.

4. Rotor blade assembly according to any of the preceding claims, **characterized in that** the tuning mass and/or the cavity is adapted such that the tuning mass comes into collisions with the inner wall in the predetermined operating state of the turbomachine.

5. Rotor blade assembly according to any of the preceding claims, **characterized in that** a cavity (3) is formed in or on an inner or outer ring of at least one blade of the blade assembly, in particular under a platform (1.1) of at least one blade (1) of the blade assembly.

6. Rotor blade assembly according to any of the preceding claims, **characterized in that** a cavity is formed in an airfoil of a blade of the blade assembly.

7. Turbomachine, in particular a gas turbine, having at least one rotor blade assembly according to any of the preceding claims.

8. Method for designing a rotor blade assembly according to any of the preceding claims 1 to 6, **characterized in that** at least one tuning mass (2) and/or the cavity (3) which receives said tuning mass is adapted such that the tuning mass rests against the inner wall (3.1) in the predetermined first operating state of the turbomachine and moves away from the inner wall, at least temporarily, in the second.

## Revendications

1. Ensemble d'aubes mobiles pour une turbomachine, en particulier pour une turbine à gaz, comportant au moins une aube mobile (1), l'ensemble d'aubes mobiles comportant au moins un espace creux (3) dans lequel au moins une masse de syntonisation (2) est agencée de manière mobile, la masse de syntonisation et/ou l'espace creux étant adaptés de telle sorte que la masse de syntonisation repose contre une paroi intérieure (3.1) de l'espace creux dans un premier état de fonctionnement prédéfini de la turbomachine, et se sépare, au moins temporairement, de la paroi intérieure dans un second état de fonctionnement prédéfini de la turbomachine, **caractérisé en ce qu'**un état de fonctionnement parmi le premier état de fonctionnement prédéfini et le second état de fonctionnement prédéfini d'une fréquence propre de l'ensemble d'aubes mobiles est adjacent à la masse de syntonisation reposant contre la paroi intérieure ou espacée de celle-ci, l'état de fonctionnement adjacent se trouvant dans la plage de 0,9 à 0,99 fois cette fréquence propre de l'ensemble d'aubes mobiles.

2. Ensemble d'aubes mobiles selon la revendication 1, **caractérisé en ce qu'**une masse, une forme, une surface, un centre de gravité et/ou un tenseur d'inertie de la masse de syntonisation et/ou une forme et/ou une surface de la paroi intérieure de l'espace creux sont adaptés de telle sorte que la masse de syntonisation repose contre la paroi intérieure dans le premier état de fonctionnement, et se sépare, au moins temporairement, de la paroi intérieure dans le second état de fonctionnement.

3. Ensemble d'aubes mobiles selon l'une des revendications précédentes, **caractérisé en ce que** la masse de syntonisation est montée élastiquement dans l'espace creux, la masse de syntonisation et son palier élastique étant adaptés de telle sorte que la masse de syntonisation repose contre la paroi intérieure dans le premier état de fonctionnement, et est espacée, au moins temporairement, de la paroi intérieure dans le second état de fonctionnement.

4. Ensemble d'aubes mobiles selon l'une des revendications précédentes, **caractérisé en ce que** la masse de syntonisation et/ou l'espace creux sont adaptés de telle sorte que la masse de syntonisation impacte la paroi intérieure dans l'état de fonctionnement prédéfini de la turbomachine.

5. Ensemble d'aubes mobiles selon l'une des revendications précédentes, **caractérisé en ce qu'**un espace creux (3) est réalisé dans ou sur une bague intérieure ou extérieure d'au moins une aube de l'ensemble d'aubes, en particulier sous une plateforme (1.1) d'au moins une aube (1) de l'ensemble d'aubes.

6. Ensemble d'aubes mobiles selon l'une des revendications précédentes, **caractérisé en ce qu'**un espace creux est réalisé dans une pale d'une aube de l'ensemble d'aubes.

7. Turbomachine, en particulier turbine à gaz, comportant au moins un ensemble d'aubes mobiles selon l'une des revendications précédentes.

8. Procédé de conception d'un ensemble d'aubes mobiles selon l'une des revendications 1 à 6 précédentes, **caractérisé en ce qu'**au moins une masse de syntonisation (2) et/ou l'espace creux (3) qui la reçoit sont adaptés de telle sorte que la masse de syntonisation repose contre la paroi intérieure (3.1) dans le premier état de fonctionnement prédéfini de la turbomachine, et se sépare, au moins temporairement, de la paroi intérieure dans le second état de fonctionnement.
